# EUROPEAN PATENT SPECIFICATION

(11) **EP 2 168 021 B1**
(45) Date of publication and mention of the grant of the patent: **23.07.2014**
(21) Application number: 08768556.6
(22) Date of filing: 18.06.2008
(51) Int. Cl.: A01B 69/04, G05D 1/02

(54) **VEHICLE AUTO-GUIDANCE MEMORY**
SPEICHER ZUR AUTOMATISCHEN FAHRZEUGLENKUNG
MÉMOIRE DE GUIDE AUTOMATIQUE DE VÉHICULE

(30) Priority: 11.07.2007 US 827464
(43) Date of publication of application: 31.03.2010
(73) Proprietor: TSD Integrated Controls, LLC, Livermore, CA 94551 (US)
(72) Inventor: REED, Keith, East Bethel, MN 55011 (US); GOMES, Michael, John, Rancho Murieta, CA 95683 (US)
(74) Representative: Kuhnen & Wacker
(86) International application number: PCT/US2008/007562
(87) International publication number: WO 2009/008954

(56) References cited:
- EP-A- 0 738 946
- EP-A- 0 971 276
- US-A1- 2003 088 344
- US-A1- 2004 210 357
- US-A1- 2005 288 834
- US-A1- 2006 167 600
- US-B1- 6 359 553

## Description

### FIELD OF THE INVENTION

The present invention relates generally to vehicle auto-guidance, and more particularly to memories for use in vehicle auto-guidance.

### BACKGROUND OF THE INVENTION

Automatic guidance (auto-guidance) systems have been used to guide equipment (e.g., vehicles) over a desired path. Such auto-guidance systems are increasingly used for controlling many different types of agricultural and other similar equipment where following a previously defined route is desirable. This allows more precise control of the vehicles than is typically realized if the vehicle is steered by a human.

Auto-guidance systems generally include a satellite positioning receiver, such as a Global Positioning System (GPS) unit, and a master controller for translating position information from the GPS unit into vehicle guidance signals. Either of the GPS unit or the master controller are used to store (e.g., in a memory) vehicle-specific control parameters which relate to the vehicles the components are used in. These control parameters include information about the vehicle or class of vehicles (e.g., wheel base, antenna location, etc.) on which the components are installed. The control parameters are used in conjunction with the position information by the master controller to generate auto-guidance control signals. For example, the master controller may use the current position of the vehicle and the vehicle's wheel base to determine an angle to steer the vehicle (e.g., an amount to turn the wheels) to guide the vehicle along a predetermined path.

In some cases, the GPS unit and the master controller are integrated into a single unit. In such cases, the integrated unit is used to store control parameters related to the vehicles on which the integrated unit is used.

Unfortunately, auto-guidance systems with these components are generally very expensive. Accordingly, end users often utilize only one GPS unit and/or master controller and transfer the component(s) from vehicle to vehicle. When using auto-guidance systems in such a way, the transferred component or components must be recalibrated and/or the specific control parameters must be located and uploaded for use. This results in lengthy start-up times and requires user intervention. Therefore, alternative components and methods are required to minimize start-up time and user intervention.

U.S. Patent Publication No. 20060167600 relates to a system and method for automatically steering a vehicle along an intended path. The system is architecturally partitioned. The partitioned design allows each of the system elements to be designed and maintained independently while allowing variation and flexibility in system configuration. An embodiment of the system elements may comprise a local navigation guidance unit, an external positioning system, a steering controller, and an installation and service computer. Additional elements of an embodiment of the system may comprise a steering position sensor, and at least one steering actuator. The system allows the operator to enter an intended target path and certain vehicle parameters. The local navigation guidance unit compares the positional data with the intended target path to obtain guidance error and transmits the guidance error to the steering controller. The system allows for determination of the current steering angle and generation of a steering angle and the guidance error. The steering angle adjustment is used to actuate a steering mechanism to smoothly guide the vehicle along the intended target path.

### SUMMARY OF THE INVENTION

The present invention provides improved methods and apparatus for vehicle auto-guidance. In accordance with an embodiment of the invention, a vehicle includes a resident memory that stores specific parameters of the vehicle. The vehicle also includes a satellite positioning receiver and a controller for receiving position information from the satellite positioning receiver and vehicle specific parameters from the memory and generating vehicle guidance signals based on the position information and the vehicle specific parameters.

In other embodiments, a vehicle-resident control component includes a device adapted to assist in control of a vehicle and a memory adapted to store vehicle specific parameters. The vehicle control component could be a controller such as a valve controller, user interface, display device, or auxiliary controller.

In other embodiments, the memory may be used for auto-guidance. A method for auto-guidance includes receiving position information, receiving vehicle specific parameters from a vehicle-resident memory, and generating auto-guidance control signals based at least in part on the received position information and the vehicle specific parameters. The method for auto-guidance may also include sending the vehicle specific parameters to a vehicle controller, generating auto-guidance control signals based at least in part on vehicle information received from a component of the vehicle, and transmitting the auto-guidance control signals to a steering component of the vehicle.

These and other advantages of the invention will be apparent to those of ordinary skill in the art by reference to the following detailed description and the accompanying drawings.

### BRIEF DESCRIPTION OF THE DRAWINGS

FIG. 1 depicts a vehicle for use with an auto-guidance system;
FIG. 2 depicts a schematic diagram of a communication system for an auto-guidance system according to an embodiment of the present invention; and
FIG. 3 depicts a method of auto-guidance of a vehicle according to an embodiment of the present invention.

### DETAILED DESCRIPTION

The present invention generally provides methods and apparatus for vehicle auto-guidance and on-board memories for use in vehicle auto-guidance. An on-board (e.g., permanent, attached, built-in, local, etc.) memory of a vehicle is capable of storing information (e.g., vehicle specific parameters) used in auto-guidance specific to that particular vehicle and/or a class of vehicles and passing the information through a vehicle communication network. The information is then accessed in real time and/or transferred (e.g., at start-up, install, etc.) to a removable master controller and/or removable satellite positioning receiver (e.g., GPS unit) to aid in auto-guidance of the vehicle. In this way, the master controller and/or the GPS unit may be removed and/or re-installed on a vehicle without having to store the vehicle specific information. This is beneficial in that the master controller and/or the GPS unit may be moved to and from another vehicle. Thus, costs may be reduced and the overall operation may be simplified.

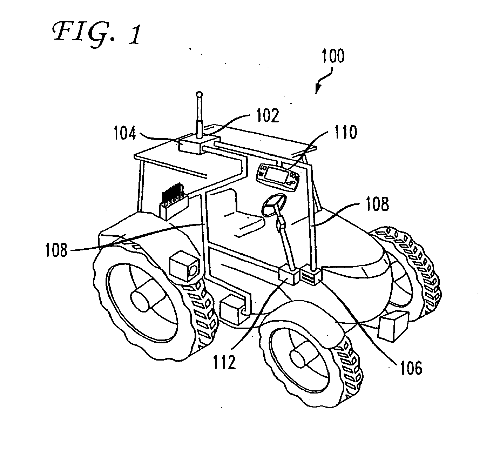

FIG. 1 depicts an automatically guided vehicle 100. The vehicle 100 comprises a satellite positioning receiver 102, a master controller 104, and a memory storage 106. The satellite positioning receiver 102, the master controller 104, and/or the memory storage 106 may be coupled and/or be in communication with each other via a communications network 108. The vehicle may further comprise a display 110, a steering component 112, and/or other known components of auto-guided vehicle. The display 110, the steering component 112, and/or the other components may similarly be coupled and/or be in communication via the communications network 108.

The satellite positioning receiver 102 may be any device capable of receiving satellite signals and generating position information based on the received signals. Such devices include Global Navigation Satellite System (GNSS) receivers, Global Positioning System (GPS) receivers, antennas, and the like. Additionally or alternatively, alternate positioning receivers, such as Long Range Navigation (LORAN) or Enhanced LORAN receivers, may be used in place of or in combination with satellite positioning receivers. Further discussion is directed to satellite positioning receivers, though any appropriate positioning receivers may be used.

The satellite positioning receiver 102 may use the received satellite signals to determine a position (e.g., a position of the vehicle, a position of the receiver, etc.) and/or may pass the signals to another device, such as the master controller 104 Via the communications network 108, where position information may be determined. Satellite positioning receiver 102 may be removable from the vehicle 100 (e.g., an aftermarket GPS unit) and/or may be built into the vehicle 100.

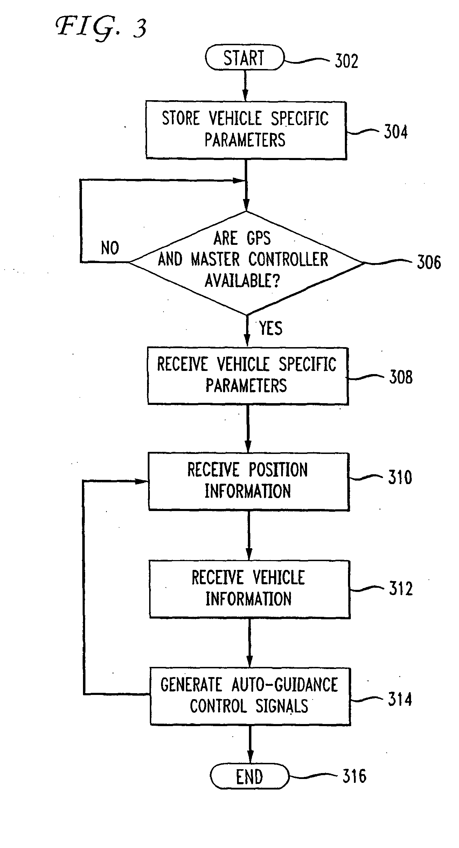

The master controller 104 may generate vehicle guidance and/or auto-guidance control signals based on the position information and other stored information. The master controller 104 may send these signals via communications network 108 to one or more of the memory storage 106, the display 110, the steering component 112, and/or any other component used in the guidance and/or control of the vehicle 100. For example, the guidance and/or control signals may be sent to a motor, a steering shaft, or an auxiliary controller, etc. Such vehicle guidance signals may be signals used in auto-guidance of the vehicle 100 in accordance with known auto-guidance methods and/or the auto-guidance method 300 of FIG. 3.

Additionally, the master controller 104 may receive feedback and/or information signals from the various components of vehicle 100. Particularly, the master controller 104 may receive position information from the satellite positioning receiver 102, vehicle specific parameters from the memory storage 106, input information from the display 110, steering angle information from the steering component 112, and/or other signals in a vehicle auto-guidance system.

The master controller 104 may be removable from the vehicle 100 (e.g., for servicing and/or for use by another vehicle). In one or more embodiments, the satellite positioning receiver 102 and the master controller 104 may be the same unit. That is, the master controller 104 and the satellite positioning receiver 102 may be a single device comprising memories and componentry suitable for the capabilities of both devices.

In the same or alternative embodiments, the master controller 104 and/or the satellite positioning receiver 102 may not be installed on or affixed to the vehicle 100 and may transmit position information and/or vehicle guidance signals to components of the vehicle 100 over the communications network 108. For example, the master controller 104 may reside on a remote tower (not shown) and may transmit wireless signals to the vehicle 100 over a wireless communications network 108, as discussed below.

The memory storage 106 may be any device capable of storing information. In some embodiments, the memory storage 106 may be incorporated into and/or be component of one or more of the display 110, the steering component 112, a steering valve (not shown), a valve controller, an auxiliary controller, and/or any other location on or component of vehicle 100. Thus, the memory storage 106 may reside on-board the vehicle 100 and may be a component which is not customarily removed in general operation (e.g., in contrast to the satellite positioning receiver 102 and the master controller 104).

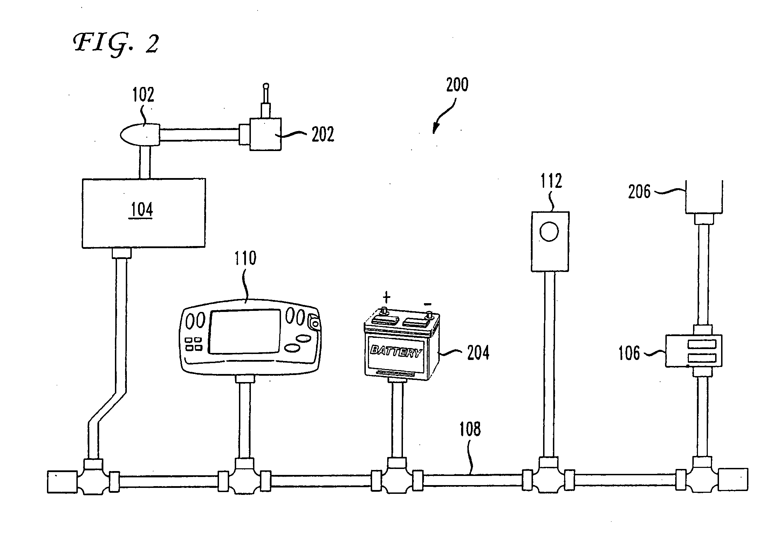

Memory storage 106 may store and/or be capable of storing, updating, calculating, detecting, receiving, and/or transmitting one or more vehicle specific parameters. In this way, the memory storage 106 may be used to assist in control of the vehicle 100. The vehicle specific parameters may include system geometry (e.g., wheel base, vehicle height, location of the antenna on the vehicle, the type of vehicle (e.g., front-wheel steering, rear-wheel steering, articulated steering, coordinated steering, etc.), location of a control point with respect to a vehicle reference point, etc.) relating to the particular vehicle 100 and/or a class of similar vehicles. The memory storage 106 may calculate and/or store other related vehicle specific parameters such as wheel angle, etc. Similarly, the memory storage 106 may store a position of the satellite positioning receiver 102 and/or a related antenna 202 (FIG. 2) on the vehicle 100 as well as use the position information to calculate corrections for vehicle pitch and/or roll. The memory storage 106 may further store vehicle specific parameters of control and use these specific parameters to customize generic auto-guidance control routines (e.g, by sending the parameters to the master controller 104 for use in generating auto-guidance control signals). Such vehicle specific parameters of control may include cylinder size, spool deadband, signal amplification, tuning constants, maximum vehicle speed, wheel angle calibration values, and steering aggressiveness, among other parameters. One of skill in the art will recognize the many vehicle specific parameters which may be stored on the memory storage 106 which are not listed herein.

In some embodiments, one or more of the vehicle specific parameters may be transmitted from the memory storage 106 to the satellite positioning receiver 102, the master controller 104, and/or a combined master controller and satellite positioning receiver where one or more of the related vehicle specific parameters may be calculated and/or used in an auto-guidance control routine. The vehicle specific parameters may be transmitted via the communications network 108.

In a particular embodiment, memory storage 106 may be implemented in a device with both a memory storage area and a steering controller. Such a device may be capable of performing the functions of a memory storage as described herein as well as a steering controller for use in an automatically guided vehicle, as is known in the art. Such a memory storage 106 implemented with a steering controller will be discussed further below with respect to FIG. 3 and method 300.

Communications network 108 may be a communications bus, such as a Controlled Area Network (CAN) bus or a serial bus (e.g., a RS232 serial bus). In some embodiments, the communications network 108 may comprise a wireless communications network via Bluetooth, Wi-Fi, General Packet Radio Service (GPRS), WLAN, or another wireless technique. Similarly, communications network 108 may comprise a parallel data connection. In some embodiments, the communications network 108 may incorporate more than one communication technique. For example, the memory storage 106 and the display 110 may be connected over communications network 108 via a CAN bus while the memory storage 106 may transmit information to the master controller 104 over the communications network 108 using a Bluetooth transmitter. Other combinations of communications technologies may be used similarly.

Display 110 may be a user interface capable of displaying information to a user and/or receiving commands from a user. Information regarding the auto-guidance of vehicle 100 may be displayed to a user (e.g., current position, sensed obstacles, alerts, etc.) and one or more command options may be presented (e.g., start-up, selecting an auto-guidance control routine, designating a route, selecting one or more predetermined routes and/or vehicle paths, selecting vehicle specific parameters, etc.). Exemplary user interfaces include touch screens, personal computers, and computer systems adapted to perform the functions of the display 110. Other appropriate interfaces for use in auto-guidance and control may be used.

Steering component 112 may be a sensor and/or controller capable of determining and/or controlling a steering angle of the vehicle 100. Steering component 112 may be any appropriate type of sensor and/or controller.

In some embodiments, the satellite positioning receiver 102, the master controller 104, the display 110, and/or the memory storage 106 may be implemented on and/or may include any components or devices that are typically used by, or used in connection with, a computer or computer system. Although not explicitly pictured in FIG. 1, the satellite positioning receiver 102, the master controller 104, the display 110, and/or the memory storage 106 may include one or more central processing units, read only memory (ROM) devices and/or random access memory (RAM) devices. The satellite positioning receiver 102, the master controller 104, the display 110, and/or the memory storage 106 may also include one or more databases for storing any appropriate data and/or information such as position or location information, auto-guidance control routines and commands, and vehicle specific parameters as discussed above, one or more programs or sets of instructions for executing methods of the present invention, and/or any other computer components or systems, including any peripheral devices.

According to some embodiments of the present invention, instructions of a program (e.g., controller software) may be read into a memory of the satellite positioning receiver 102, the master controller 104, the display 110, and/or the memory storage 106 from another medium, such as from a ROM device to a RAM device or from a LAN adapter to a RAM device. Execution of sequences of the instructions in the program may cause the satellite positioning receiver 102, the master controller 104, the display 110, and/or the memory storage 106 to perform one or more of the method steps described herein. In alternative embodiments, hard-wired circuitry or integrated circuits may be used in place of, or in combination with, software instructions for implementation of the processes of the present invention. Thus, embodiments of the present invention are not limited to any specific combination of hardware, firmware, and/or software. The memory may store the software for the controller, which may be adapted to execute the software program and thereby operate in accordance with the present invention and particularly in accordance with the methods described in detail below. However, it would be understood by one of ordinary skill in the art that the invention as described herein could be implemented in many different ways using a wide range of programming techniques as well as general purpose hardware sub-systems or dedicated controllers.

The program may be stored in a compressed, uncompiled and/or encrypted format. The program furthermore may include program elements that may be generally useful, such as an operating system, a database management system and device drivers for allowing the controller to interface with computer peripheral devices and other equipment/components. Appropriate general purpose program elements are known to those skilled in the art, and need not be described in detail herein.

FIG. 2 depicts a schematic diagram of a communication system 200 for use with an auto-guidance system in vehicle 100 according to an embodiment of the invention. The communication system 200 comprises the satellite positioning receiver 102 and master controller 104, which may have an antenna 202, display 110, a battery 204, steering component 112, a wheel angle component 206, and memory storage 106. These and other components of vehicle 100 of FIG. 1 and/or the communication system 200 may be connected by and/or may communicate through communication network 108.

Similar to the steering component 112 of FIG. 1, wheel angle component 206 may be a sensor and/or a controller capable of determining and/or controlling a wheel angle of the vehicle 100. Wheel angle component 206 may be any appropriate type of sensor and/or controller.

In operation, the vehicle 100 may perform a method 300 of auto-guidance as depicted in FIG. 3. The method begins at step 302.

In step 304, vehicle specific parameters are stored in memory storage 106 or another location on-board vehicle 100. As discussed above with respect to FIG. 1, the vehicle specific parameters may be stored at one or more memory locations which may be the memory storage 106 or another vehicle resident location.

In step 306, a check is performed to determine if the satellite positioning receiver 102 (e.g., a GPS unit) and the master controller 104 are installed on the vehicle 100 or are accessible via the communications network 108. This determination may be made by a user, may be performed as part of a start-up (e.g., automatically when the vehicle is started) or similar routine by the components of vehicle 100, or may be checked by one or more of vehicle components such as memory storage 106 or display 110.

If the master controller 104 and the satellite positioning receiver 102 are unavailable, the check may be performed again. If the master controller 104 and the satellite positioning receiver 102 are available, the method proceeds to step 308.

In step 308, the vehicle specific parameters stored in memory storage 106 are transmitted over the communication network 108 and received at the master controller 104 and/or the satellite positioning receiver 102.

In step 310, position information is received from the satellite positioning receiver 102 at the master controller 104. It may be understood that method steps 308 and 310 may be performed at the same time or in the reverse order.

In step 312, the master controller 104 receives vehicle information for and/or from various components of the vehicle 100. Such information may include a vehicle path selected and/or determined by a user and entered at display 110, a current wheel angle from the wheel angle component 206, steering wheel position information from the steering component 112 or another sensor, and/or any other appropriate information about the state of the vehicle 100 and/or an intended auto-guidance method or path.

In step 314, the master controller 104 generates auto-guidance control signals. These signals may be based at least in part on the vehicle specific parameters received in step 308, the position information received in step 310, and/or the vehicle information received in step 312. Auto-guidance control signals may be transmitted over communication network 108 to one or more components of vehicle 100. Auto-guidance control signals may be any signals which guide and/or direct one or more components of the vehicle 100. Such signals may include a steering angle to be steered sent to the memory storage 106, a steering controller (not shown), or a memory storage implemented in a device with a steering controller, current position and/or projected path displayed on a map displayed on display 110, braking control signals transmitted to vehicle 100's brakes (not shown), etc.

During operation, the method 300 may return control from step 314 to step 310 and continue from that point. Thus, new position information may be received at the master controller 104 and, using the vehicle specific parameters previously uploaded from the memory storage 106 and/or other vehicle information received in step 312, the master controller 104 may generate new auto-guidance control signals and generally automatically guide the vehicle 100.

The method 300 may continue in this manner until a stop control signal is received. Methods for terminating auto-guidance are known in the art and will not be discussed in detail herein. Accordingly, the method ends at step 316.

In exemplary embodiments, the systems, apparatus, and methods described herein may be used in auto-guidance of agricultural vehicles such as tractors, harvesters, sprayers, combines, etc. In a particular embodiment, the vehicle 100 may be a tractor with vehicle specific parameters such as wheel base and turning radius which are different than the wheel base and turning radius of a sprayer. A single master controller/satellite positioning receiver may be used on both the tractor and the sprayer and may be transferred therebetween when needed. The tractor stores its wheel base and turning radius in an on-board memory storage; similarly the sprayer stores its own wheel base and turning radius in a separate memory storage on-board the sprayer. These vehicle parameters are then uploaded to the single master controller/satellite positioning receiver when needed for agricultural operations in which the vehicle is auto-guided. Thus, the cost of the overall operation is lowered as only one expensive receiver/controller unit is needed.

The foregoing description discloses only particular embodiments of the invention; modifications of the above disclosed methods and apparatus which fall within the scope of the invention will be readily apparent to those of ordinary skill in the art. For instance, it will be understood that, though discussed primarily as a separate storage location above, the invention may employed at any appropriate component capable of storage which may be permanently on-board a vehicle. Additionally, though discussed in the method steps as separate units, the satellite positioning system and master controller may be one unit and their functions within the method may this be merged. Similarly, other components may perform the functions of method 300 even when not explicitly discussed. Accordingly, while the present invention has been disclosed in connection with specific embodiments thereof, it should be understood that other embodiments may fall within the spirit and scope of the invention, as defined by the following claims.

## Claims

1. A vehicle (100) comprising a satellite positioning receiver (102) configured to determine a location of the receiver; a memory (106) storage storing vehicle specific parameters; and a controller (104) adapted to receive position information from the satellite positioning receiver (102), receive vehicle specific parameters from the memory (106), generate vehicle guidance signals based at least in part on the position information and the vehicle specific parameters, and transmit the vehicle guidance signals to one or more components of the vehicle, **characterized in that**
the memory (106) is fixed to the vehicle (100)
the vehicle specific parameters pertain to an inherent geometry of the vehicle (100); and
the controller (104) is separate from the memory (106) and removable from the vehicle (100).

2. The vehicle (100) of claim 1 further comprising:
a communication bus adapted to transmit position information from the satellite positioning receiver (102) and vehicle specific parameters from the memory (106) to the controller (104).

3. The vehicle (100) of claim 1 further comprising:
a wireless communication device adapted to transmit position information from the satellite positioning receiver (102) and vehicle specific parameters from the memory (106) to the controller (104).

4. The vehicle (100) of claim 1 further comprising:
a component adapted to receive vehicle guidance signals from the controller (104) and effect steering of the vehicle based on the vehicle guidance signals.

5. The vehicle (100) of claim 1 further comprising:
a user interface adapted to receive input and transmit the input to the controller (104).

6. The vehicle (100) of claim 5 wherein the input is a selection of a predetermined route for the vehicle (100).

7. A vehicle-resident control component comprising a device adapted to assist in control of a vehicle (100); and a memory (106) storing vehicle specific parameters, the device adapted to receive vehicle specific parameters from the memory (106), and generate vehicle guidance signals based at least in part on the position information and the vehicle specific parameters received from a satellite positioning receiver (102) and the memory (106); **characterized in that**:
the memory (106) is fixed to the vehicle (100);
the vehicle specific parameters pertain to an inherent geometry of the vehicle (100); and
the device is separate from the memory (106) are removable from the vehicle (100).

8. The vehicle-resident control component of claim 7 wherein the memory (106) is incorporated into a valve controller (104).

9. The vehicle-resident control component of claim 7 wherein the memory (106) is incorporated into display device (110).

10. The vehicle-resident control component of claim 7 wherein the memory (106) is incorporated into an auxiliary controller (104).

11. The vehicle control component of claim 7 wherein the vehicle-resident control component is further adapted to control the vehicle (100).

12. A method of auto-guidance comprising receiving, by a controller (104) position information; storing the vehicle specific parameters on the vehicle-resident memory (106); receiving, by the controller (104), the vehicle specific parameters from the vehicle-resident memory (106); and generating auto-guidance control signals by the controller (104) to be transmitted to one or more components of the vehicle (100), based at least in part on the received position information and the vehicle specific parameters; **characterized in that**:
the vehicle-resident memory (106) is fixed to the vehicle (100);
the vehicle specific parameters pertain to an inherent geometry of the vehicle (100); and
the controller (104) is separate from the vehicle-resident memory (106) and removable from the vehicle (100).

13. The method of claim 12 wherein the vehicle specific parameters are sent to the vehicle controller (104) automatically when the vehicle (100) is started.

14. The method of claim 12 wherein generating auto-guidance control signals based at least in part on the received position information and the vehicle specific parameters further comprises:
receiving vehicle information pertaining to a current state of a component of a vehicle (100) and generating auto-guidance control signals based at least in part on the received position information, the vehicle specific parameters, and the vehicle information.

15. The method of claim 12 further comprising: transmitting the generated auto-guidance control signals to one or more steering components of a vehicle (100).

## Patentansprüche

1. Fahrzeug (100), aufweisend: einen Satellitenpositionierungsempfänger (102), der dafür konfiguriert ist, einen Standort des Empfängers zu bestimmen; einen Speicher (106), der Fahrzeug-spezifische Parameter speichert; und eine Steuereinrichtung (104), die dafür ausgebildet ist, Positionsinformationen von dem Satellitenpositionsempfänger (102) zu empfangen, Fahrzeug-spezifische Parameter von dem Speicher (106) zu empfangen, Fahrzeugführungssignale zu erzeugen, die wenigstens teilweise auf den Positionsinformationen und den Fahrzeug-spezifischen Parametern basieren, und die Fahrzeugführungssignale an eine oder mehrere Komponenten des Fahrzeugs zu senden,
**dadurch gekennzeichnet, dass**
der Speicher (106) an dem Fahrzeug (100) befestigt ist,
die Fahrzeug-spezifischen Parameter zu einer inhärenten Geometrie des Fahrzeugs (100) gehören; und
die Steuereinrichtung (104) von dem Speicher (106) getrennt angeordnet ist und von dem Fahrzeug (100) entfernt werden kann.

2. Fahrzeug (100) nach Anspruch 1, ferner aufweisend:
einen Kommunikationsbus, der dafür ausgebildet ist, Positionsinformationen von dem Satellitenpositionsempfänger (102) und Fahrzeug-spezifische Parameter von dem Speicher (106) an die Steuereinrichtung (104) zu senden.

3. Fahrzeug (100) nach Anspruch 1, ferner aufweisend:
eine Vorrichtung für drahtlose Kommunikation, die dafür ausgebildet ist, Positionsinformationen von dem Satellitenpositionsempfänger (102) und Fahrzeug-spezifische Parameter von dem Speicher (106) an die Steuereinrichtung (104) zu senden.

4. Fahrzeug (100) nach Anspruch 1, ferner aufweisend:
eine Komponente, die dafür ausgebildet ist, Fahrzeugführungssignale von der Steuereinrichtung (104) zu empfangen und das Lenken des Fahrzeugs auf Grundlage der Fahrzeugführungssignale zu bewirken.

5. Fahrzeug (100) nach Anspruch 1, ferner aufweisend:
eine Benutzerschnittstelle, die dafür ausgebildet ist, Eingaben zu empfangen und die Eingaben an die Steuereinrichtung (104) zu senden.

6. Fahrzeug (100) nach Anspruch 5, wobei die Eingabe eine Auswahl einer vorbestimmten Strecke für das Fahrzeug (100) ist.

7. Fahrzeugresidente Steuerkomponente, aufweisend: eine Vorrichtung, die dafür ausgebildet ist, die Steuerung eines Fahrzeugs (100) zu unterstützen; und einen Speicher (106), der Fahrzeug-spezifische Parameter speichert, wobei die Vorrichtung dafür ausgebildet ist, Fahrzeug-spezifische Parameter von dem Speicher (106) zu empfangen und Fahrzeugführungssignale wenigstens teilweise auf Grundlage der Positionsinformationen und der Fahrzeug-spezifischen Parameter, die von einem Satellitenpositionsempfänger (102) und dem Speicher (106) empfangen werden, zu erzeugen
**dadurch gekennzeichnet, dass**
der Speicher (106) am Fahrzeug (100) befestigt ist;
die Fahrzeug-spezifischen Parameter zu einer inhärenten Geometrie des Fahrzeugs (100) gehören; und
die Vorrichtung von dem Speicher (106) getrennt angeordnet ist und von dem Fahrzeug (100) entfernt werden kann.

8. Fahrzeugresidente Steuerkomponente nach Anspruch 7, wobei der Speicher (106) in eine Ventilsteuereinrichtung (104) integriert ist.

9. Fahrzeugresidente Steuerkomponente nach Anspruch 7, wobei der Speicher (106) in eine Anzeigeeinheit (110) integriert ist.

10. Fahrzeugresidente Steuerkomponente nach Anspruch 7, wobei der Speicher (106) in eine Hilfssteuereinrichtung (104) integriert ist.

11. Fahrzeugsteuerkomponente nach Anspruch 7, wobei die fahrzeugresidente Steuerkomponente ferner dafür ausgebildet ist, das Fahrzeug (100) zu steuern.

12. Verfahren für automatische Führung, das beinhaltet: Empfangen von Positionsinformationen durch eine Steuereinrichtung (104); Speichern der Fahrzeug-spezifischen Parameter in dem fahrzeugresidenten Speicher (106); Empfangen der Fahrzeug-spezifischen Parameter von dem fahrzeugresidenten Speicher (106) durch die Steuereinrichtung (104); und Erzeugen von an eine oder mehrere Komponenten des Fahrzeugs (100) zu sendenden Steuersignalen für automatische Führung von der Steuereinrichtung (104) wenigstens teilweise auf Grundlage der empfangenen Positionsinformationen und der Fahrzeug-spezifischen Parameter,
**dadurch gekennzeichnet, dass**:
der fahrzeugresidente Speicher (106) an dem Fahrzeug (100) befestigt ist;
die Fahrzeug-spezifischen Parameter zu einer inhärenten Geometrie des Fahrzeugs (100) gehören; und
die Steuereinrichtung (100) von dem fahrzeugresidenten Speicher (106) getrennt angeordnet ist und von dem Fahrzeug (100) entfernt werden kann.

13. Verfahren nach Anspruch 12, wobei die Fahrzeug-spezifischen Parameter automatisch an die Fahrzeugsteuereinrichtung gesendet (104) werden, wenn das Fahrzeug (100) gestartet wird.

14. Verfahren nach Anspruch 12, wobei das Erzeugen von Steuersignalen für automatische Führung wenigstens teilweise auf Grundlage der empfangenen Positionsinformationen und der Fahrzeug-spezifischen Parameter ferner aufweist:
Empfangen von Fahrzeuginformationen, die zu einem Ist-Zustand einer Komponente eines Fahrzeugs (100) gehören, und Erzeugen von Steuersignalen für automatische Führung wenigstens teilweise auf Grundlage der empfangenen Positionsinformationen, der Fahrzeug-spezifischen Parameter und der Fahrzeuginformationen.

15. Verfahren nach Anspruch 12, ferner aufweisend: Senden der erzeugten Steuersignale für automatische Führung an eine oder mehrere Lenkkomponenten eines Fahrzeugs (100).

## Revendications

1. Véhicule (100) comprenant un récepteur de positionnement par satellite (102) conçu pour déterminer un emplacement du récepteur ; un stockage mémoire (106) stockant des paramètres spécifiques au véhicule ; et une unité de commande (104) conçue pour recevoir des informations de position du récepteur de positionnement par satellite (102), recevoir des paramètres spécifiques au véhicule de la mémoire (106), générer des signaux de guidage du véhicule basés au moins en partie sur les informations de position et les paramètres spécifiques au véhicule, et transmettre les signaux de guidage du véhicule à un ou plusieurs composants du véhicule, **caractérisé en ce que**
la mémoire (106) est fixée au véhicule (100)
les paramètres spécifiques au véhicule ont rapport à une géométrie inhérente au véhicule (100) ; et
l'unité de commande (104) est séparée de la mémoire (106) et peut être retirée du véhicule (100).

2. Véhicule (100) selon la revendication 1, comprenant en outre :
un bus de communication conçu pour transmettre des informations de position depuis le récepteur de positionnement par satellite (102) et des paramètres spécifiques au véhicule depuis la mémoire (106) à l'unité de commande (104).

3. Véhicule (100) selon la revendication 1 comprenant en outre :
un dispositif de communication sans fil conçu pour transmettre des informations de position depuis le récepteur de positionnement par satellite (102) et des paramètres spécifiques au véhicule depuis la mémoire (106) à l'unité de commande (104).

4. Véhicule (100) selon la revendication 1 comprenant en outre :
un composant conçu pour recevoir des signaux de guidage du véhicule depuis l'unité de commande (104) et réaliser le pilotage directionnel du véhicule sur la base des signaux de guidage du véhicule.

5. Véhicule (100) selon la revendication 1 comprenant également :
une interface utilisateur conçue pour recevoir une entrée et transmettre l'entrée à l'unité de commande (104).

6. Véhicule (100) selon la revendication 5, l'entrée étant un choix d'un itinéraire déterminé pour le véhicule (100).

7. Composant de commande résidant dans un véhicule comprenant un dispositif conçu pour assister la commande d'un véhicule (100) ; et une mémoire (106) stockant des paramètres spécifiques au véhicule, le dispositif étant conçu pour recevoir des paramètres spécifiques au véhicule de la mémoire (106), et générer des signaux de guidage du véhicule basés en partie au moins sur les informations de position et les paramètres spécifiques au véhicule reçus d'un récepteur de positionnement par satellite (102) et de la mémoire (106) ; **caractérisé en ce que** :
la mémoire (106) est fixée au véhicule (100) ;
les paramètres spécifiques au véhicule se rapportent à une géométrie inhérente au véhicule (100) ; et
le dispositif est séparé de la mémoire (106) et peut être retiré du véhicule (100).

8. Composant de commande résidant dans un véhicule selon la revendication 7, la mémoire (106) étant intégrée dans une unité de commande de vannes (104).

9. Composant de commande résidant dans un véhicule selon la revendication 7, la mémoire (106) étant intégrée dans un dispositif d'affichage (110).

10. Composant de commande résidant dans un véhicule selon la revendication 7, la mémoire (106) étant intégrée dans une unité de commande auxiliaire (104).

11. Composant de commande résidant dans un véhicule selon la revendication 7, le composant de commande résidant dans le véhicule étant en outre conçu pour commander le véhicule (100).

12. Procédé de guidage automatique comprenant la réception, par une unité de commande (104), d'informations de position ; le stockage des paramètres spécifiques au véhicule dans la mémoire (106) résidant dans le véhicule ; la réception, par l'unité de commande (104), des paramètres spécifiques au véhicule depuis la mémoire (106) résidant dans le véhicule ; et la génération de signaux de commande de guidage automatique par l'unité de commande (104) devant être transmis à un ou plusieurs composants du véhicule (100), sur la base au moins en partie des informations de position et des paramètres spécifiques au véhicule reçus ; **caractérisé en ce que** :
la mémoire (106) résidant dans le véhicule est fixée au véhicule (100) ;
les paramètres spécifiques au véhicule se rapportent à une géométrie inhérente au véhicule (100) ; et
l'unité de commande est séparée de la mémoire (106) résidant dans le véhicule et peut être retirée du véhicule (100).

13. Procédé selon la revendication 12, les paramètres spécifiques au véhicule étant envoyés à l'unité de commande (104) automatiquement au démarrage du véhicule (100).

14. Procédé selon la revendication 12, dans lequel la génération de signaux de commande de guidage automatique basés en partie au moins sur les informations de position et les paramètres spécifiques au véhicule reçus comprend en outre :
la réception d'informations du véhicule se rapportant à un état actif d'un composant d'un véhicule (100) et la génération de signaux de commande de guidage automatique basés au moins en partie sur les informations de position reçues, les paramètres spécifiques au véhicule et les informations du véhicule.

15. Procédé selon la revendication 12 comprenant en outre : la transmission des signaux de commande de guidage automatique générés à un ou plusieurs composants de pilotage directionnel du véhicule (100).
